# EUROPÄISCHE PATENTSCHRIFT

(11) **EP 3 874 242 B1**
(45) Veröffentlichungstag und Bekanntmachung des Hinweises auf die Patenterteilung: **20.12.2023**
(21) Anmeldenummer: 19769480.5
(22) Anmeldetag: 16.09.2019
(51) Int. Cl.: G01F 23/284, G01F 25/20, G01S 7/292, G01S 7/40, G01S 13/10, G01S 13/30, G01S 13/36, G01S 13/88

(54) **FÜLLSTANDSMESSGERÄT**
FILL LEVEL MEASUREMENT DEVICE
APPAREIL DE MESURE DE NIVEAU DE REMPLISSAGE

(30) Priorität: 30.10.2018 DE 102018127012
(43) Veröffentlichungstag der Anmeldung: 08.09.2021
(73) Patentinhaber: Endress+Hauser SE+Co. KG, 79689 Maulburg (DE)
(72) Erfinder: DAUFELD, Ghislain, 68128 Village Neuf (FR); KEMPA, Arnd, 79585 Steinen (DE); GORENFLO, Stefan, 79688 Hausen (DE)
(74) Vertreter: Koslowski, Christine Adelheid
(86) Internationale Anmeldenummer: PCT/EP2019/074713
(87) Internationale Veröffentlichungsnummer: WO 2020/088830

(56) Entgegenhaltungen:
- WO-A1-01/02819
- WO-A1-2016/202533
- US-A1- 2017 370 762

## Beschreibung

Die Erfindung betrifft Verfahren zur Überprüfung der Funktionstüchtigkeit eines Füllstandsmessgerätes.

In der Prozessautomatisierungstechnik werden Feldgeräte eingesetzt, die zur Erfassung oder zur Beeinflussung von Prozessvariablen dienen. Hierzu basiert die Funktionsweise der Feldgeräte auf jeweils geeigneten Messprinzipien, um die entsprechenden Prozessvariablen, wie Füllstand, Durchfluss, Druck, Temperatur, pH-Wert, Redoxpotential oder Leitfähigkeit zu erfassen. Verschiedenste solcher Feldgeräte-Typen werden von der Firma Endress + Hauser hergestellt und vertrieben.

Zur Füllstandsmessung von Füllgütern in Behältern haben sich Radar-basierte Messverfahren etabliert, da sie robust und wartungsarm sind. Dabei werden unter dem Begriff *"Behälter"* im Rahmen der Erfindung auch nichtabgeschlossene Behältnisse, wie beispielsweise Becken, Seen oder fließende Gewässer verstanden. Ein zentraler Vorteil Radar-basierter Messverfahren besteht in der Fähigkeit, den Füllstand quasi kontinuierlich messen zu können. Im Kontext dieser Patentanmeldung bezieht sich der Begriff "*Radar*" auf Signale bzw. elektromagnetische Wellen mit Frequenzen zwischen 0.03 GHz und 300 GHz.

Im Fall von Radar-basierter Füllstandsmessung bildet das Pulslaufzeit-Verfahren ein etabliertes Messprinzip. Hierbei werden Mikrowellenpulse zyklisch mit einer definierten Taktrate in Richtung des Füllguts ausgesandt und die Laufzeit bis zum Empfang des entsprechend reflektierten Mikrowellenpulses gemessen.

Zur Ermittlung der Laufzeit bzw. des Füllstandes wird anhand der empfangenen, reflektierten Mikrowellenpulse ein entsprechendes Auswertungssignal aufgezeichnet. Dabei wird das Auswertungssignal aufgrund der hohen Pulsfrequenz durch Unterabtastung der reflektierten Mikrowellenpulse erstellt. Die Unterabtastung erfolgt durch Mischen der reflektierten Mikrowellenpulse mit entsprechenden erzeugten Abtastpulsen, wobei deren Abtastrate um eine definiertes Verhältnis von der Taktrate der ausgesendeten Mikrowellenpulse abweicht. Damit diese definierte Soll-Phasenänderung zwischen der Abtastrate und der Taktrate eingehalten wird, wird die Abtastrate durch einen Regelkreis in Abhängigkeit der gemessenen Relation nachgeregelt. Insgesamt bildet das Auswertungssignal somit die Signalamplitude der reflektierten Mikrowellenpulse zeitgedehnt ab. Hierbei spiegelt das Auswertungssignal die Signalamplitude der reflektierten Mikrowellenpulse in Abhängigkeit der Messdistanz wieder.

Auf Basis des Pulslaufzeit-Verfahrens können Füllstandsmessgeräte mit vergleichsweise geringem schaltungstechnischem Aufwand und einer hohen Füllstands-Auflösung im Sub-Millimeterbereich realisiert werden. Radar-basierte Füllstandsmessgerät, welche nach dem Pulslaufzeit-Verfahren arbeiten, sind beispielsweise in den Offenlegungsschriften DE 10 2012 104 858 A1 und WO2016/202533 A1 beschrieben. Demnach werden Mikrowellenpulse über eine Antenne mit einer definierten Taktrate ausgesendet und die entsprechend reflektierten Mikrowellenpulse werden nach Reflektion an der Oberfläche des Füllgutes über die Antenne empfangen. Durch Abtastung der empfangenen Mikrowellenpulse mit definierter Abtastrate wird gemäß des Pulslaufzeit-Prinzips ein entsprechend zeitgedehntes Auswertungssignal erstellt.

Der Füllstand wird bestimmt, indem im Auswertungssignal das entsprechende Signalmaximum ermittelt wird. Dabei kann die Position des Signalmaximums im Auswertungssignal dem Füllstand zugeordnet werden. Je nach Signalstärke der empfangenen Mikrowellenpulse können diese im Empfangspfad durch einen steuerbaren Verstärker bedarfs- bzw. situationsabhängig verstärkt werden. Dabei wird der Verstärker durch geräteintern wiederum durch ein entsprechendes Regelsignal geregelt.

Neben frei abstrahlender Radar-Messung, bei der die Mikrowellenpulse über eine Antenne ausgesendet bzw. empfangen werden, existiert zudem die Variante des geführten Radars. Hierbei werden die Mikrowellenpulse über eine elektrisch leitfähige Sonde (bspw. ein Koaxial-Kabel oder einen Metallstab), die in den Behälter hinuntergelassen ist, geführt. Am Ort der Füllgutoberfläche werden in der Sonde die Mikrowellenpulse reflektiert und entlang der Sonde gen Füllstandsmessgerät zurückgeleitet. Bekannt ist diese Variante der Radar-basierten Füllstandsmessung auch unter dem Begriff *"TDR"* ("*Time Domain Reflectometry*"). Vorteilhaft an dieser Variante ist, dass aufgrund der geführten Signalabstrahlung weniger Leistung zum Betrieb des Füllstandsmessgerätes erforderlich ist. Analog zu frei abstrahlenden Radargeräten nach dem Pulslaufzeit-Verfahren wird auch bei Implementierung des TDR-Prinzips ein Auswertungssignal zur Ermittlung des Füllstandes erstellt. Unabhängig von freier Abstrahlung oder geführtem Radar wird der Füllstand durch Detektion und örtlicher Zuweisung des entsprechenden lokalen Signal-Maximums im Auswertungssignal bestimmt.

Durch interne Alterungseffekte oder durch äußere Umwelteinflüsse kann die Funktionstüchtigkeit der Geräte-Elektronik des Füllstandsmessgerätes mit fortschreitenden Betriebszeiten verloren gehen. Verursacht werden kann dies beispielsweise durch Verstimmung von Oszillatoren, durch Abnahme der Kapazität von Kondensatoren oder durch Impedanz-Änderungen in Verstärkerschaltungen. Dies kann einerseits problematisch sein, wenn von außen nicht erkennbar ist, dass der Füllstand nicht mehr korrekt erfasst wird. Hierdurch können kritische Zustände in der Prozessanlage, wie eine Überfüllung des Behälters, hervorgerufen werden. Zum anderen kann ein unerwartet auftretender Funktionsausfall des Füllstandsmessgerätes zu langen Stillstands Zeiten der Prozessanlage führen, wodurch dem Betreiber ein erheblicher finanzieller Schaden entstehen kann.

Der Erfindung liegt daher die Aufgabe zugrunde, ein Füllstandsmessgerät bereitzustellen, dessen Funktionstüchtigkeit überprüft werden kann.

Die Erfindung löst diese Aufgabe durch ein Verfahren zur Überprüfung der Funktionstüchtigkeit eines Radar-basierten Füllstandsmessgerätes, dass zur Messung des Füllstandes eines in einem Behälter befindlichen Füllgutes dient. Folgende Verfahrensschritte umfasst das Verfahren:
- Getaktetes Aussenden von Mikrowellenpulsen in Richtung des Füllgutes mit einer definierten Taktrate,
- Empfang reflektierter Mikrowellenpulse nach Reflektion an der Oberfläche des Füllgutes,
- Erstellung eines Auswertungssignals durch Abtastung der empfangenen Mikrowellenpulse mit einer definierten Abtastrate,
- Messung eines Verhältnisses zwischen der Taktrate und der Abtastrate,
- Abgleich des Verhältnisses mit einem Soll-Verhältnis, indem die Abtastrate mittels einer ersten Regelgröße derart in Bezug zum Soll-Verhältnis geregelt wird, dass das Verhältnis dem Soll-Verhältnis entspricht, und
- Messung einer Amplitude und/oder eines Amplituden-Versatzes des Auswertungssignals, wobei die Amplitude mittels einer zweiten Regelgröße geregelt wird, bzw. wobei der Amplituden-Versatz mittels einer dritten Regelgröße geregelt wird.

Erfindungsgemäß wird das Füllstandsmessgerät als funktionstüchtig eingestuft, sofern keine der Regelgrößen einen entsprechenden, definierten Grenzwert über- bzw. unterschreitet.

Das Verfahren basiert auf der erfindungsgemäßen Erkenntnis, dass anhand der Werte verschiedener Regelgrößen die momentane Funktionsfähigkeit des Füllstandsmessgerätes beurteilt werden kann, da bei Vorliegen einer Störung an einer der elektronischen Komponenten je nach Regelkreis nicht mehr ausreichend nachgeregelt werden kann. Vorteilhaft an dem erfindungsgemäßen Verfahren ist zudem, dass das Füllstandsmessgerät seine Funktionsfähigkeit selber überprüfen kann, so dass es dies im Zweifelsfall anzeigen oder einer übergeordneten Prozessleitstelle melden kann.

Auf Basis des erfindungsgemäßen Verfahrens kann zudem gemäß dem Prinzip der "*Predictive Maintenance"* eine Prognose erstellt werden kann, wieviel Restbetriebszeit bis zu einem etwaigen Funktionsausfall des Füllstandsmessgerätes verbleibt, sofern das Füllstandsmessgerät aktuell noch funktionstüchtig ist. Hierzu wird im Falle des zuerst genannten Verfahrens über fortschreitende Füllstands-Messzyklen eine erste Änderungsfunktion der ersten Regelgröße ermittelt, sofern die erste Regelgröße den ersten Grenzwert nicht überschreitet. Somit kann anhand der aktuellen ersten Regelgröße und anhand der ersten Änderungsfunktion eine Restbetriebszeit bis zum Erreichen des ersten Grenzwertes berechnet werden.

Analog hierzu kann im Falle des zweiten Verfahrens zur Erstellung einer Ausfall-Prognose über fortschreitende Füllstands-Messzyklen eine zweite Änderungsfunktion der zweiten Regelgröße bzw. eine dritte Änderungsfunktion der dritten Regelgröße ermittelt werden, sofern die zweite oder dritte Regelgröße den zweiten Grenzwert bzw. dritten Grenzwert nicht überschreitet. Auch in diesem Fall kann anhand der aktuellen, zweiten oder dritten Regelgröße und anhand der jeweiligen Änderungsfunktion eine Restbetriebszeit bis zum Erreichen des zweiten beziehungsweise dritten Grenzwertes berechnet werden. Ein geeigneter Funktionstyp der ersten Änderungsfunktion, der zweiten Änderungsfunktion und/oder der dritten Änderungsfunktion kann beispielsweise mittels der Methode der kleinsten Quadrate ermittelt werden. Auch dies kann vom Füllstandsmessgerät selbst ausgeführt werden.

Da die Regelgrößen innerhalb des Füllstandsmessgerätes oftmals nicht nur von der Funktionsfähigkeit spezifischer Komponenten abhängt, sondern zudem von der Temperatur am Füllstandsmessgerät, ist es im Rahmen der Erfindung gegebenenfalls vorteilhaft, wenn am Füllstandsmessgerät eine Temperatur gemessen wird, und wenn der erste Grenzwert, der zweite Grenzwert und/oder der dritte Grenzwert als ein von der Temperatur abhängige Funktion definiert sind/ist.

Korrespondierend zu dem erfindungsgemäßen Verfahren wird die Aufgabe, die der Erfindung zugrunde liegt, durch ein Radar-basiertes Füllstandsmessgerät gelöst, das zur Durchführung zumindest eines der Verfahren nach einem der vorhergehenden Ausführungsvarianten ausgelegt ist. Hierzu umfasst das Füllstandsmessgerät folgende Komponenten:
- Eine Puls-Erzeugungseinheit, die ausgelegt ist, elektrische Hochfrequenz-Pulse mit einer definierten Taktrate zu erzeugen,
- Eine Sende-/Empfangseinheit, die konzipiert ist,
   o um die Hochfrequenz-Pulse als Mikrowellenpulse in Richtung des Füllgutes auszusenden, und
   o um die reflektierten Mikrowellenpulse nach Reflektion an der Oberfläche des Füllgutes zu empfangen,
- eine Abtast-Einheit, die ausgelegt ist, elektrische Abtast-Pulse mit einer definierten Abtastrate zu erzeugen,
- einen Mischer, der ausgestaltet ist,
   o um die empfangenen Mikrowellenpulse derart mit den Abtastpulsen zu mischen, dass ein Auswertungssignal erzeugt wird, und/oder
   o um einen Amplitudenversatz des Auswertungssignals zu steuern,
- einen Detektor, der ausgelegt ist, ein Verhältnis zwischen der Abtast-Rate der Abtast-Pulse und der Taktrate der Hochfrequenzpulse zu messen, und
- eine Auswertungseinheit, die ausgelegt ist,
   o um das Verhältnis mit dem Soll-Verhältnis abzugleichen, indem die Abtastrate mittels der ersten Regelgröße derart in Bezug zum Soll-Verhältnis geregelt wird, dass das Verhältnis dem Soll-Verhältnis entspricht, und um die Amplitude oder den Amplituden-Versatz des Auswertungssignals zu messen, wobei die Amplitude mittels einer zweiten Regelgröße geregelt wird, bzw. wobei der Amplituden-Versatz mittels einer dritten Regelgröße geregelt wird,
   o um anhand des Auswertungssignals den Füllstand zu bestimmen, und
   o um sich als funktionstüchtig einzustufen, sofern keine der Regelgrößen den entsprechenden Grenzwert über bzw. unterschreitet.

Die Auswertungseinheit kann dabei zudem so ausgelegt werden, dass eine etwaige Funktionsuntüchtigkeit an eine übergeordnete Einheit übermittelt wird.

Unter dem Begriff "*Einheit*" wird im Rahmen der Erfindung prinzipiell eine elektronische Schaltung verstanden, die für ihren Einsatzzweck geeignet ausgelegt ist. Es kann sich also je nach Anforderung um eine Analogschaltung zur Erzeugung bzw. Verarbeitung entsprechender analoger Signale handeln. Es kann sich jedoch auch um eine (halbleiterbasierte) Digitalschaltung wie einem FPGA oder einen Speichermedium in Zusammenwirken mit einem Programm handeln. Dabei ist das Programm ausgelegt, die entsprechenden Verfahrensschritte durchzuführen bzw. die notwendigen Rechenoperationen der jeweiligen Einheit anzuwenden. In diesem Kontext können verschiedene elektronische Einheiten des Füllstandsmessgerätes im Sinne der Erfindung potentiell auch auf einen gemeinsamen physikalischen Speicher zurückgreifen bzw. mittels derselben physikalischen Digitalschaltung betrieben werden.

Anhand der nachfolgenden Figuren wird die Erfindung näher erläutert. Es zeigt:
Fig. 1: Eine typische Anordnung eines Radar-basierten Füllstandsmessgerätes,
Fig. 2: einen schaltungstechnischen Aufbau des Füllstandsmessgerätes,
Fig. 3: eine vom Füllstandsmessgerät erstellte Auswertungskurve, und
Fig. 4: eine Berechnung der Restbetriebszeit des Füllstandsmessgerätes.

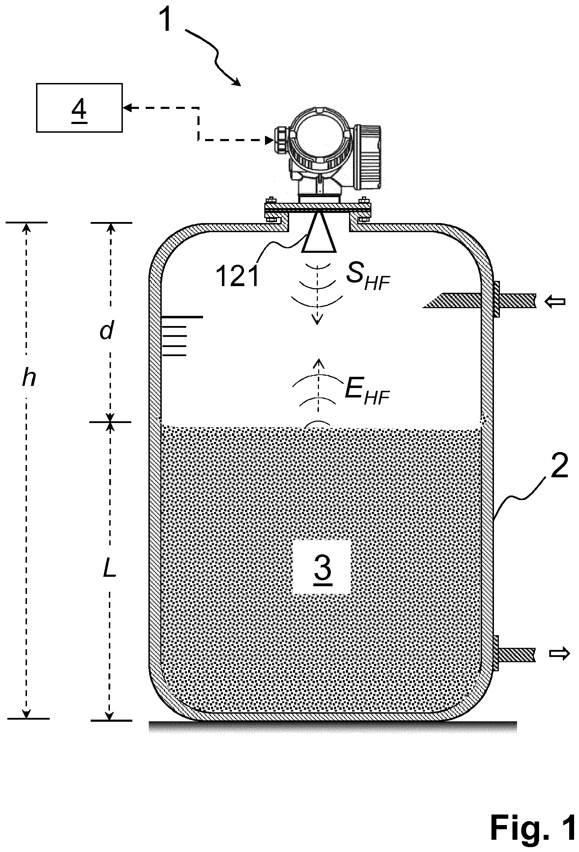

Zum grundsätzlichen Verständnis der Erfindung ist in Fig. 1 eine typische Anordnung eines frei abstrahlenden, Radar-basierten Füllstandsmessgerätes 1 an einem Behälter 2 gezeigt. In dem Behälter 2 befindet sich ein Füllgut 3, dessen Füllstand L durch das Füllstandsmessgerät 1 zu bestimmen ist. Dazu ist das Füllstandsmessgerät 1 oberhalb des maximal zulässigen Füllstands L am Behälter 2 angebracht. Je nach Einsatzgebiet kann die Höhe h des Behälters 2 bis zu 125 m betragen.

In der Regel ist das Füllstandsmessgerät 1 über ein Bussystem, etwa "Ethernet", "PROFIBUS", "HART" oder "Wireless HART" mit einer übergeordneten Einheit 4, beispielsweise einem Prozessleitsystem oder einer dezentralen Datenbank verbunden. Hierüber können zum einen Informationen über den Betriebszustand des Füllstandsmessgerätes 1 kommuniziert werden. Über das Bussystem können jedoch auch Informationen über den Füllstand L übermittelt werden, um gegebenenfalls am Behälter 2 vorhandene Zu- oder Abflüsse zu steuern.

Da das in Fig. 1 dargestellte Füllstandsmessgerät 1 als frei abstrahlendes Radar ausgelegt ist, umfasst es eine entsprechende Antenne 121. Dabei kann die Antenne 121, wie angedeutet, beispielswiese als Hornantenne ausgelegt sein. Unabhängig von der Bauform ist die Antenne 121 so ausgerichtet, dass gemäß dem Pulslaufzeit-Verfahren entsprechende Mikrowellenpulse S_{HF} in Richtung des Füllgutes 3 ausgesendet werden.

An der Oberfläche des Füllgutes 3 werden die Mikrowellenpulse E_{HF} reflektiert und nach einer korrespondierenden Signallaufzeit an der Antenne 121 als entsprechende elektrische Empfangssignale e_{HF} empfangen. Hierbei hängt die Signallaufzeit der Mikrowellenpulse S_{HF}, E_{HF} von der Entfernung d = h - L des Füllstandsmessgerätes 1 zur Füllgut-Oberfläche ab.

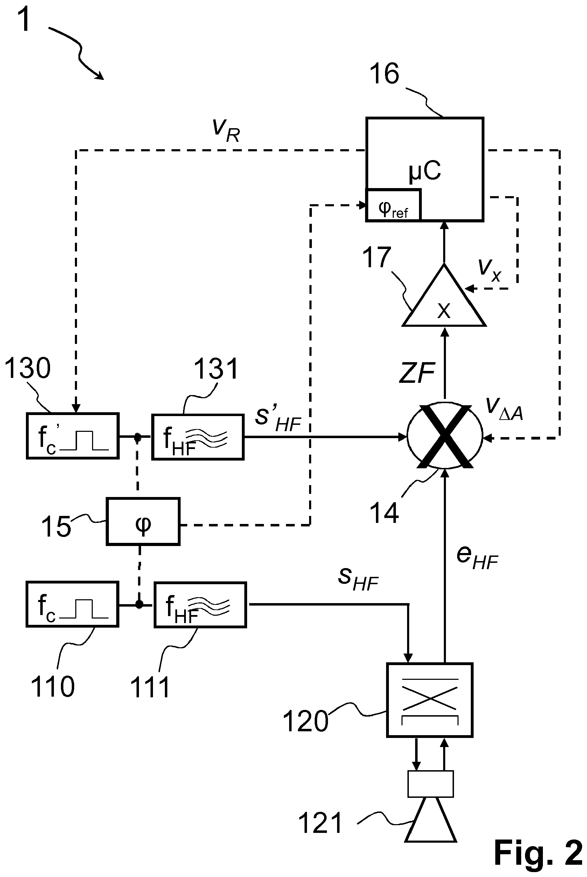

Ein schaltungstechnischer Aufbau des Füllstandsmessgerätes 1, mit dem die Mikrowellenpulse S_{HF} erzeugt werden können, und mit dem auf Basis der elektrischen Empfangssignale e_{HF} der Füllstand L bestimmt werden kann, ist in Fig. 2 gezeigt:

Zur Erzeugung der Mikrowellenpulse S_{HF} umfasst die in Fig. 2 gezeigte Schaltung des Füllstandsmessgerätes 1 eine Puls-Erzeugungseinheit. Die Puls-Erzeugungseinheit ist so konzipiert, dass sie elektrische Hochfrequenz-Pulse s_{HF} mit einer definierten Taktrate f_{c} erzeugt. Hierzu besteht die Puls-Erzeugungseinheit im gezeigten Ausführungsbeispiel aus einem ersten Pulsgenerator 110, der einen ersten Hochfrequenz-Oszillator 111 ansteuert. Durch die Schwingfrequenz des Hochfrequenz-Oszillators 111 wird die Frequenz der Mikrowellenpulse S_{HF}, E_{HF} festgelegt. Dabei kann der Hochfrequenz-Oszillator 111 im einfachsten Fall als Schwingquarz ausgelegt sein. Es kann auch ein VCO ("*Voltage Controlled Oscillator*") eingesetzt werden. In diesem Fall wird der Hochfrequenz-Oszillator 111 durch den Pulsgenerator 110 mittels eines Gleichspannungssignals angesteuert. Hierdurch definiert der Pulsgenerator 110 die Pulsdauer der einzelnen Mikrowellenpulse S_{HF} sowie die Taktrate f_{c}, mit der die Mikrowellenpulse S_{HF} ausgesendet werden. Standardmäßig wird als Hochfrequenz-Oszillator 111 ein Halbleiterbasierter Digital-Schwingkreis verwendet. Die Taktrate beträgt in der Praxis zwischen 100 KHz und 1 MHz.

Die hierdurch vom Hochfrequenz-Oszillator 111 erzeugten Hochfrequenz-Pulse s_{HF} werden über eine Sende-/Empfangsweiche 120 der Antenne 121 zugeführt, so dass sie entsprechend als Mikrowellenpulse S_{HF} ausgesendet werden. Da über die Antenne 121 außerdem die reflektierten Mikrowellenpulse E_{HF} empfangen werden, führt die Sende-/Empfangsweiche 120 das entsprechende elektrische Empfangssignal e_{HF} einem Mischer 14 zu.

Im Gegensatz zu der gezeigten Ausführungsvariante kann anstelle der Antenne 121 auch eine elektrisch leitfähige Sonde wie ein Hohlleiter oder ein Koaxialkabel eingesetzt werden, die sich gen Behälterboden erstreckt. Bei Implementierung dieser unter dem Begriff TDR ("*Time Domain Reflectometry*") bekannten Ausführungsvariante sind im Gegensatz zu der in Fig. 2 gezeigten Schaltung die Hochfrequenz-Oszillatoren 111, 131 nicht erforderlich.

Mittels des Mischers 14 erfolgt die beim Pulslaufzeit-Verfahren charakteristische Unterabtastung des Empfangssignals e_{HF}. Hierzu wird das Empfangssignal e_{HF} durch den Mischer 14 mit elektrischen Abtast-Pulsen s'_{HF} gemischt. Dabei weicht die Abtastrate f'_{c}, mit der die Abtast-Pulse s'_{HF} erzeugt werden, um ein definiertes, geringes Verhältnis φ von weit weniger als 0.1 Promille von der Taktrate f_{c} der erzeugten Hochfrequenz-Pulse s_{HF} ab. Je nach Typ des Mischers 14 kann dieser konzipiert sein, dass ein etwaiger Amplitudenversatz ΔA des Auswertungssignals ZF mittels eines entsprechenden dritten Regelsignals v_{ΔA} einstellbar bzw. kompensierbar ist. Je nach Auslegung des Mischers 14 ist als drittes Regelsignal v_{ΔA} ein analoges Spannungs- bzw. Stromsignal oder ein digitales Signal zu anzulegen. Bei der in Fig. 2 gezeigten Schaltung des Füllstandsmessgerätes 1 wird der Amplitudenversatz ΔA des Auswertungssignals ZF am Mischer 14 durch eine Auswertungseinheit 16 geregelt.

Die Abtast-Pulse s'_{HF} werden durch eine Abtast-Einheit erzeugt, die analog zu der Puls-Erzeugungseinheit einen zweiten Pulsgenerator 130 und einen zweiten Hochfrequenz-Oszillator 131 umfasst. Somit wird korrespondierend zu den Hochfrequenz-Pulsen s_{HF} die Frequenz f_{HF} der Abtastpulse s'_{HF} durch den zweiten Hochfrequenz-Oszillator 131 definiert. Der zweite Pulsgenerator 130 steuert die Abtast-Rate f'_{c}, mit der die Abtast-Pulse s'_{HF} erzeugt werden.

Zur korrekten Bestimmung des Füllstandes L auf Basis des Auswertungssignals ZF ist es essentiell, dass die Abtast-Rate f'_{c} der Abtast-Einheit exakt ihrer Soll-Abtast-Rate entspricht: Dies bedeutet, dass die Relation φ zur Taktrate f_{c} der Pulserzeugungs-Einheit einer geforderten Soll-Relation φ_{ref} entspricht. Damit die Abtast-Rate f'_{c} hiervon nicht abdriftet, wird sie entsprechend geregelt. Die Regelung erfolgt bei dem in Fig. 2 gezeigten Ausführungsbeispiel durch einen Detektor 15, der das Verhältnis φ zwischen der Taktrate f_{c} und der Abtast-Rate f'_{c} hinter dem ersten Pulsgenerator 110 bzw. dem zweiten Pulsgenerator 130 misst. Technisch umsetzbar ist dies beispielsweise, indem der Detektor 15 über mehrere Phasen eine Änderung der Zeitverschiebung zwischen der positiven Flanke am ersten Pulsgenerator 110 und der positiven Flanke am zweiten Pulsgenerator 130 misst.

Aus der Änderung der Zeitverschiebung berechnet die Auswertungseinheit 16 das Verhältnis φ zwischen der Taktrate f_{c} und der Abtast-Rate f'_{c}. Außerdem gleicht die Auswertungseinheit 16 das ermittelte Verhältnis φ zwischen der Taktrate f_{c} und der Abtast-Rate f α mit einem hinterlegten Soll-Verhältnis φ_{ref} ab. Hierdurch kann die Auswertungseinheit 16 die Abtastrate f'_{c} am zweiten Pulsgenerator 130 so in Abhängigkeit zu dem gemessenen Verhältnis φ regeln, dass das Verhältnis φ mit dem Soll-Verhältnis φ_{ref} von beispielsweise 1,0001 übereinstimmt.

Bei der in Fig. 2 gezeigten Ausführungsvariante regelt die Auswertungseinheit 16 den zweiten Pulsgenerator 130 mittels eines entsprechenden ersten Regelsignals v_{R}. Je nach Auslegung des zweiten Pulsgenerators 130 kann es sich bei dem ersten Regelsignal v_{R} wiederum um ein analoges Spannungs- bzw. Stromsignal oder ein digitales Signal handeln.

Durch das Mischen des Empfangssignals e_{HF} mit den elektrischen Abtast-Pulsen s'_{HF} mittels des Mischers 14 wird ein Auswertungssignal ZF erzeugt, welches das Empfangssignal e_{HF} zeitgedehnt abbildet. Dabei ändert sich der Zeitdehnungsfaktor proportional mit dem Verhältnis φ zwischen der Taktrate f_{c} und der Abtastrate f'_{c}.

Vorteilhaft an der Zeitdehnung ist, dass das Auswertungssignal ZF aufgrund der Zeitdehnung im Vergleich zu dem reinen Empfangssignal e_{HF} technisch deutlich einfacher auswertbar ist: Der Grund hierfür ist, dass das Empfangssignal e_{HF} aufgrund der hohen Ausbreitungsgeschwindigkeit der Mikrowellenpulse S_{HF}, E_{HF} mit Lichtgeschwindigkeit eine entsprechend kurze Zeitskala im Nanosekundenbereich aufweist. Durch die Zeitdehnung erhält das Auswertungssignal ZF eine Zeitskala zwischen 100 kHz und 5 MHz.

Um das Auswertungssignal pegeltechnisch anzupassen, ist zwischen dem Mischer 14 und der Auswertungseinheit 16 im gezeigten Ausführungsbeispiel ein Verstärker 17 angeordnet, um die Signal-Amplitude A des Auswertungssignals ZF insgesamt anzupassen. Die Regelung kann dabei wiederum durch die Auswertungseinheit 16 erfolgen, indem der Verstärkungsfaktor x in Abhängigkeit des von der Auswertungseinheit 16 erfassten Auswertungssignals ZF nachgeregelt wird. Alternativ oder zusätzlich zu einer externen Regelung der Amplituden-Verstärkung x oder des Amplituden-Versatzes ΔA mittels des Verstärkers 17 bzw. mittels des Mischers 14 kann die Auswertungs-Einheit 16 auch ausgelegt sein, das Auswertungssignal ZF lediglich intern bzw. digital um die Amplituden-Verstärkung x oder den Amplituden-Versatz ΔA nach zu korrigieren, ohne das eine externe Nachregelung des eingehenden Auswertungssignals ZF erfolgt.

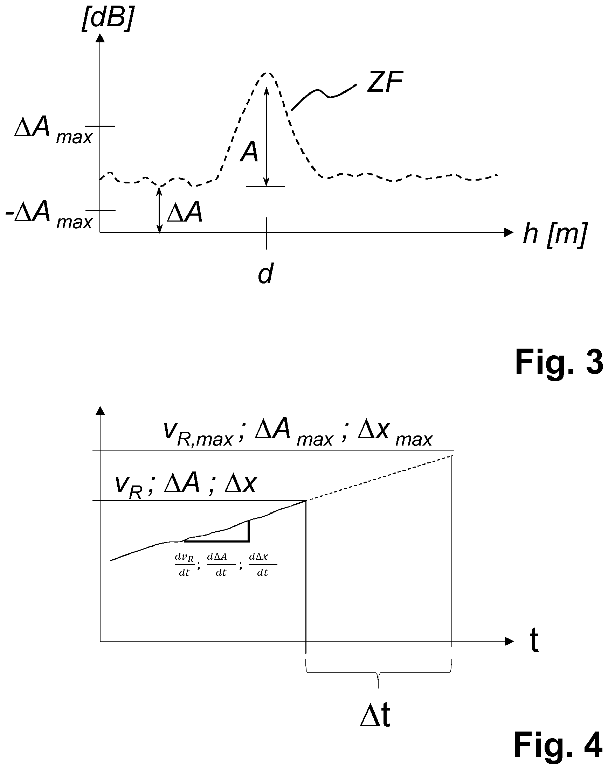

Eine schematische Auswertungskurve ZF ist in Fig. 3 dargestellt: Auf Basis des Auswertungssignals ZF bestimmt die Auswertungseinheit 16 des Füllstandsmessgerätes 1 den Füllstand L, indem die Auswertungseinheit 16 dasjenige Maximum des Auswertungssignals ZF ermittelt, das durch die Oberfläche des Füllgutes 3 hervorgerufen wurde (bei dem in Fig. 3 dargestellten, schematischen Auswertungssignal ZF ist aus Gründen der Veranschaulichung ausschließlich dieses Amplituden-Maximum dargestellt). Nach Ermittlung des Maximums wird die zum Maximum korrespondierende Entfernung d bestimmt. Somit kann die Auswertungseinheit 16 den Füllstand L gemäß dem Zusammenhang L = h - d bestimmen.

Mit fortschreitendem Betrieb des Füllstandsmessgerätes 1 steigt die Gefahr, dass einzelne Komponenten der jeweiligen Schaltungs-Einheiten 11, 12, 13, 14, 15, 16, 17 degradieren. So können sich bspw. Oszillatoren 111, 131 verstimmen, Impedanzen können sich ändern, oder Kapazitäten von Kondensatoren können abnehmen. Je nach Schaltungs-Einheit 11, 12, 13, 14, 15, 16, 17 kann dies dazu führen, dass entweder eine fehlerhafte Auswertungskurve ZF erstellt wird, oder dass gar keine Auswertungskurve ZF mehr erstellbar ist. In beiden Fällen ist das Füllstandsmessgerät 1 also nicht mehr funktionstüchtig.

Die erfindungsgemäße Idee zur Überprüfung der Funktionstüchtigkeit beruht darauf, die Funktionstüchtigkeit des Füllstandsmessgerätes 1 anhand der ersten Regelgröße v_{R}, der zweiten Regelgröße vₓ oder der dritten Regelgröße v_{ΔA} zu beurteilen: Sofern keine der Regelgrößen v_{R}, vₓ, v_{ΔA} einen entsprechenden, zuvor definierten Grenzwert v_{R,max}, v_{x,max}, v_{ΔA,max} überschreitet bzw. unterschreitet, wird das Füllstandsmessgerät 1 als funktionstüchtig eingestuft. Dabei kann die Überprüfung durch die Auswertungseinheit 16, also das Füllstandsmessgerät 1 selbst erfolgen, indem der Wert der jeweiligen Regelgröße v_{R}, vₓ, v_{ΔA} (bspw. als Spannungswert oder als Binärwert vorliegend) gemessen und mit dem entsprechenden Grenzwert v_{R,max}, v_{x,max}, v_{ΔA,max} verglichen wird. Sofern die Auswertungseinheit 16 ein je nach Vorzeichen des Grenzwertes v_{R,max}, v_{x,max}, v_{ΔA,max} ein Über- oder Unterschreiten schreiten des Grenzwertes v_{R,max}, v_{x,max}, v_{ΔA,max} und somit die Funktionsuntüchtigkeit detektiert, kann die Auswertungseinheit 16 dies beispielsweise an die übergeordnete Einheit 4 melden.

Da die Regelgrößen v_{R}, vₓ, v_{ΔA} gegebenenfalls neben etwaiger Degradation der elektrischen Komponenten 11, 12, 13, 14, 15, 16, 17 zudem von der Temperatur am Füllstandsmessgerät 1 abhängig sind, ist es in diesen Fällen vorteilhaft, wenn die jeweiligen Grenzwerte v_{R,max}, v_{x,max}, v_{ΔA,max} als eine von der Temperatur abhängige Funktion definiert und in der Auswertungseinheit 16 hinterlegt sind. In diesem Fall ist die Auswertungseinheit 16 mit einem entsprechenden Temperatur-Sensor auszustatten, so dass anhand der Temperatur-abhängigen Funktion sowie der aktuell gemessenen Temperatur der jeweils passende Grenzwert v_{R,max}, v_{x,max}, v_{ΔA,max} zur Beurteilung der Funktionsfähigkeit herangezogen werden kann.

Das erfindungsgemäße Verfahren kann zudem in der Form weiterentwickelt werden, dass eine Prognose erstellt werden kann, wann das Füllstandsmessgerät 1 voraussichtlich nicht mehr funktionstüchtig sein wird. Voraussetzung hierfür ist, dass der Grenzwert v_{R,max}, ΔAₘₐₓ, Δxₘₐₓ aktuell noch nicht überschritten ist, also das Füllstandsmessgerät 1 momentan noch funktionstüchtig ist. Genutzt werden kann solch eine Voraussage, um gemäß dem Prinzip der "*Predictive Maintenance"* von Seiten des Anlagenbetreibers frühzeitig eine Wartung bzw. einen Austausch des Füllstandsmessgerätes 1 einplanen zu können.

Berechnet werden kann eine voraussichtliche Restbetriebszeit Δt bis zur Funktionsuntüchtigkeit, indem die Auswertungseinheit 16 über fortschreitende Füllstands-Messzyklen, also mit zunehmender Betriebszeit des Füllstandsmessgerätes 1 zumindest eine der Regelgrößen v_{R}, vₓ, v_{ΔA} fortlaufend aufzeichnet und anhand dessen eine entsprechende Änderungsfunktion dv_{R}/dt, dvₓ/dt, dv_{ΔA}/dt der jeweiligen Regelgröße v_{R}, vₓ, v_{ΔA} ermittelt. Somit kann die Auswertungseinheit 16 anhand des Wertes der aktuellen Regelgröße v_{R}, vₓ, v_{ΔA} und anhand der jeweiligen Änderungsfunktion dv_{R}/dt, dvₓ/dt, dv_{ΔA}/dt eine korrespondierende Restbetriebszeit Δt bis zum voraussichtlichen Erreichen des ersten Grenzwertes v_{R,max}, v_{x,max}, v_{ΔA,max} berechnen. Für den Fall, dass für zwei oder alle der Regelgrößen v_{R}, vₓ, v_{ΔA} eine unterschiedliche Δt Restlaufzeit berechnet wird, kann die Auswertungseinheit 16 beispielsweise die geringste der ermittelten Restlaufzeiten Δt als geltende Restlaufzeit Δt definieren.

Schematisch dargestellt die Bestimmung der Restlaufzeit Δt in Fig. 4: Hier ist zur Veranschaulichung ein in etwa linearer Anstieg der Regelgröße v_{R}, vₓ, v_{ΔA} mit fortschreitender Betriebszeit des Füllstandsmessgerätes 1 dargestellt. Dementsprechend kann in Fig. 4 kann als Funktionstyp der Änderungsfunktion dv_{R}/dt, dvₓ/dt, dv_{ΔA}/dt im gezeigten Ausführungsbeispiel eine Geraden-Funktion herangezogen werden. Allgemein lässt sich die Änderungsfunktion dv_{R}/dt, dvₓ/dt, dv_{ΔA}/dt gegebenenfalls durch eine Geraden-Funktion jedoch nicht optimal approximieren, so dass beispielsweise eine polynomielle Funktion eine verbesserte Approximation an den Verlauf der jeweiligen Regelgröße v_{R}, vₓ, v_{ΔA} über die vergangenen Messzyklen liefert. Dementsprechend kann die Auswertungseinheit 16 beispielsweise so programmiert werden, dass sie einen geeigneten Funktionstyp der entsprechenden Änderungsfunktion dv_{R}/dt, dvₓ/dt, dv_{ΔA}/dt mittels der Methode der kleinsten Quadrate ermittelt. Hierdurch wird die verbleibende Restbetriebszeit Δt noch genauer voraussagbar.

### Bezugszeichenliste

- 1: Füllstandsmessgerät
- 2: Behälter
- 3: Füllgut
- 4: Übergeordnete Einheit
- 14: Mischer
- 15: Detektor
- 16: Auswertungseinheit
- 17: Verstärker
- 110: Erster Pulsgenerator
- 111: Erster Hochfrequenz-Oszillator
- 120: Sende-/Empfangs-Weiche
- 121: Antenne
- 130: Zweiter Pulsgenerator
- 131: Zweiter Hochfrequenz-Oszillator
- A: Amplitude
- d: Entfernung
- E_{HF}: Reflektierte Mikrowellenpulse
- e_{HF}: Empfangssignal
- f_{c}: Taktrate
- f'_{c}: Abtastrate
- f_{HF}: Frequenz der Mikrowellenpulse
- h: Einbauhöhe
- L: Füllstand
- S_{HF}: Mikrowellenpulse
- s_{HF}: Hochfrequenz-Pulse
- s'_{HF}: Abtast-Pulse
- v_{R}: Erste Regelgröße
- vₓ: Zweite Regelgröße
- v_{ΔA}: Dritte Regelgröße
- v_{R,max}: Erster Grenzwert
- v_{x,max}: Zweiter Grenzwert
- v_{ΔA,max}: Dritter Grenzwert
- ZF: Auswertungssignal
- ΔA: Amplituden-Versatz
- Δt: Restbetriebszeit
- φ: Verhältnis zwischen der Taktrate und der Abtastrate
- φ_{ref}: Soll-Verhältnis
- dv_{R}/dt: Erste Änderungsfunktion
- dvₓ/dt: Zweite Änderungsfunktion
- dv_{ΔA}/dt: Dritte Änderungsfunktion

## Patentansprüche

1. Verfahren zur Überprüfung der Funktionstüchtigkeit eines Radar-basierten Füllstandsmessgerätes (1), dass zur Messung des Füllstandes (L) eines in einem Behälter (2) befindlichen Füllgutes (3) dient, folgende Verfahrensschritte umfassend:
- Getaktetes Aussenden von Mikrowellenpulsen (S_{HF}) in Richtung des Füllgutes (3) mit einer definierten Taktrate (f_{c}),
- Empfang reflektierter Mikrowellenpulse (E_{HF}) nach Reflektion an der Oberfläche des Füllgutes (3),
- Erstellung eines Auswertungssignals (ZF) durch Abtastung der empfangenen Mikrowellenpulse (e_{HF}) mit einer definierten Abtastrate (f'_{c}),
- Messung eines Verhältnisses (Φ) zwischen der Taktrate (fₑ) und der Abtastrate (f'_{c}),
- Abgleich des Verhältnisses (φ) mit einem Soll-Verhältnis (φ_{ref}), indem die Abtastrate (f'_{c}) mittels einer ersten Regelgröße (v_{R}) derart in Bezug zum Soll-Verhältnis (φ_{ref}) geregelt wird, dass das Verhältnis (φ) dem Soll-Verhältnis (φ_{ref}) entspricht, und
- Messung einer Amplitude (A) und/oder eines Amplituden-Versatzes (ΔA) des Auswertungssignals (ZF), wobei die Amplitude (A) mittels einer zweiten Regelgröße (vₓ) geregelt wird, bzw. wobei der Amplituden-Versatz (ΔA) mittels einer dritten Regelgröße (v_{ΔA}) geregelt wird, wobei
das Füllstandsmessgerät (1) als funktionstüchtig eingestuft wird, sofern keine der Regelgrößen (v_{R}, vₓ, v_{ΔA}) einen entsprechenden, definierten Grenzwert (±v_{R,max}, ±v_{x,max}, ±v_{ΔA,max}) über- bzw. unterschreitet.

2. Verfahren nach Anspruch 1,
**dadurch gekennzeichnet, dass**
sofern die erste Regelgröße (v_{R}) den ersten Grenzwert (v_{R,max}) nicht überschreitet, über fortschreitende Füllstands-Messzyklen eine erste Änderungsfunktion (dv_{R}/dt) der ersten Regelgröße (v_{R}) ermittelt wird, wobei anhand der aktuellen ersten Regelgröße (v_{R}) und anhand der ersten Änderungsfunktion (dv_{R}/dt) eine Restbetriebszeit (Δt) bis zum Erreichen des ersten Grenzwertes (v_{R,max}) berechnet wird.

3. Verfahren nach Anspruch 1 oder 2,
**dadurch gekennzeichnet, dass**
sofern die zweite Regelgröße (vₓ) den zweiten Grenzwert (v_{x,max}) nicht überschreitet, über fortschreitende Füllstands-Messzyklen eine zweite Änderungsfunktion (dvₓ/dt) der zweiten Regelgröße (vₓ) ermittelt wird, wobei anhand der aktuellen zweiten Regelgröße (vₓ) und anhand der zweiten Änderungsfunktion (dvₓ/dt) eine Restbetriebszeit (Δt) bis zum Erreichen des zweiten Grenzwertes (v_{x,max}) berechnet wird.

4. Verfahren nach Anspruch 1 oder 2,
**dadurch gekennzeichnet, dass**
sofern die dritte Regelgröße (v_{ΔA}) den dritten Grenzwert (v_{ΔA,max}) nicht überschreitet, über fortschreitende Füllstands-Messzyklen eine dritte Änderungsfunktion (dv_{ΔA}/dt) der dritten Regelgröße (v_{ΔA}) ermittelt wird, wobei anhand der aktuellen dritten Regelgröße (v_{ΔA}) und anhand der dritten Änderungsfunktion (dv_{ΔA}/dt) eine Restbetriebszeit (Δt) bis zum Erreichen des dritten Grenzwertes (v_{ΔA,max}) berechnet wird.

5. Verfahren nach Anspruch 2 bis 4, wobei ein geeigneter Funktionstyp der ersten Änderungsfunktion (dΔv_{R}/dt), der zweiten Änderungsfunktion (dvₓ/dt) und/oder der dritten Änderungsfunktion (dv_{ΔA}/dt) mittels der Methode der kleinsten Quadrate ermittelt wird.

6. Verfahren nach einem der vorhergehenden Ansprüche,
wobei am Füllstandsmessgerät (1) eine Temperatur gemessen wird,
**dadurch gekennzeichnet, dass**
der erste Grenzwert (v_{R,max}), der zweite Grenzwert (v_{x,max}) und/oder der dritte Grenzwert (v_{ΔA,max}) als ein von der Temperatur abhängige Funktion definiert sind/ist.

7. Radar-basiertes Füllstandsmessgerät zur Durchführung zumindest eines der Verfahren nach einem der vorhergehenden Ansprüche, folgende Komponenten umfassend:
- Eine Puls-Erzeugungseinheit (110, 111), die ausgelegt ist, elektrische Hochfrequenz-Pulse (s_{HF}) mit einer definierten Taktrate (f_{c}) zu erzeugen,
- Eine Sende-/Empfangseinheit (120, 121), die konzipiert ist,
o um die Hochfrequenz-Pulse (s_{HF}) als Mikrowellenpulse (E_{HF}) in Richtung des Füllgutes (3) auszusenden, und
o um die reflektierten Mikrowellenpulse (E_{HF}) nach Reflektion an der Oberfläche des Füllgutes (3) zu empfangen,
- eine Abtast-Einheit (130, 131), die ausgelegt ist, elektrische Abtast-Pulse (s'_{HF}) mit einer definierten Abtastrate (f'_{c}) zu erzeugen,
- einen Mischer (14), der ausgestaltet ist,
o um die empfangenen Mikrowellenpulse (e_{HF}) derart mit den Abtastpulsen (s'_{HF}) zu mischen, dass ein Auswertungssignal (ZF) erzeugt wird, und/oder
o um einen Amplitudenversatz (ΔA) des Auswertungssignals (ZF) zu steuern,
- einen Detektor (15), der ausgelegt ist, ein Verhältnis (φ) zwischen der Abtast-Rate (f'_{c}) der Abtast-Pulse (s'_{HF}) und der Taktrate (f_{c}) der Hochfrequenzpulse (s_{HF}) zu messen, und
- eine Auswertungseinheit (16), die ausgelegt ist,
o um das Verhältnis (φ) mit dem Soll-Verhältnis (φ_{ref}) abzugleichen, indem die Abtastrate (f'_{c}) mittels der ersten Regelgröße (v_{R}) derart in Bezug zum Soll-Verhältnis (φ_{ref}) geregelt wird, dass das Verhältnis (φ) dem Soll-Verhältnis (φ_{ref}) entspricht, und
um die Amplitude (A) und/oder den Amplituden-Versatz (ΔA) des Auswertungssignals (ZF) zu messen, wobei die Amplitude (A) mittels einer zweiten Regelgröße (vₓ) geregelt wird, bzw. wobei der Amplituden-Versatz (ΔA) mittels einer dritten Regelgröße (v_{ΔA}) geregelt wird,
o um anhand des Auswertungssignals (ZF) den Füllstand (L) zu bestimmen, und
o um sich als funktionstüchtig einzustufen, sofern keine der Regelgrößen (vₓ, v_{ΔA}, v_{R}) den entsprechenden Grenzwert (v_{R,max}, v_{x,max}, v_{ΔA,max}) über bzw. unterschreitet.

8. Radar-basiertes Füllstandsmessgerät nach Anspruch 7, wobei die Auswertungseinheit (16) ausgelegt ist, eine etwaige Funktionsuntüchtigkeit an eine übergeordnete Einheit (4) zu übermitteln.

## Claims

1. Method to check the functional capability of a radar-based fill level measuring device (1) that is used to measure the fill level (L) of a filling material (3) located in a container (2), comprising the following process steps:
- Clocked emission of microwave pulses (s_{HF}) in the direction of the filling material (3) at a defined clock rate (f_{c}),
- Reception of reflected microwave pulses (E_{HF}) following reflection on the surface of the filling material (3),
- Generation of an evaluation signal (ZF) by sampling the microwave pulses received (e_{HF}) at a defined sampling rate (f'_{c}),
- Measurement of a ratio (Φ) between the clock rate (f_{c}) and the sampling rate (f'_{c}),
- Check of the ratio (Φ) against a target ratio (Φ_{ref}) by regulating the sampling rate (f'_{c}) relative to the target ratio (Φ_{ref}) using a first control variable (V_{R}) in such a way that the ratio (Φ) corresponds to the target ratio (Φ_{ref}), and
- Measurement of an amplitude (A) and/or an amplitude offset (ΔA) of the evaluation signal (ZF), wherein the amplitude (A) is regulated using a second control variable (vₓ) or wherein the amplitude offset (M) is regulated using a third control variable (V_{ΔA}),
wherein the fill level measuring device (1) is deemed functional, insofar as none of the control variables (v_{R}, v_{X}, v_{ΔA}) exceeds or falls below a corresponding, defined limit value (±v_{R,max}, ±v_{x,max}, ± v_{ΔA,max}).

2. Method according to claim 1,
**characterized in that**
insofar as the first control variable (v_{R}) does not exceed the first limit value (v_{R,max}), a first change function (dvₓ/dt) of the first control variable (v_{R}) is determined via progressing fill level measurement cycles, wherein a residual operating time (Δt) up to reaching the first limit value (v_{R,max}) is calculated based on the current first control variable (v_{R}) and based on the first change function (dv_{R}/dt).

3. Method according to claim 1 or 2,
**characterized in that**
insofar as the second control variable (vₓ) does not exceed the second limit value (v_{x,max}), a second change function (dvₓ/dt) of the second control variable (vₓ) is determined via progressing fill level measurement cycles, wherein a residual operating time (At) up to reaching the first limit value (v_{x,max}) is calculated based on the current second control variable (vₓ) and based on the second change function (dvₓ/dt).

4. Method according to claim 1 or 2,
**characterized in that**
insofar as the third control variable (v_{ΔA}) does not exceed the third limit value (v_{ΔA,max}), a third change function (dv_{ΔA}/dt) of the third control variable (v_{ΔA}) is determined via progressing fill level measurement cycles, wherein a residual operating time (Δt) up to reaching the third limit value (v_{ΔA,max}) is calculated based on the current third control variable (v_{ΔA}) and based on the third change function (dv_{ΔA}/dt).

5. Method according to claim 2 to 4, wherein a suitable function type of the first change function (dv_{ΔR}/dt), of the second change function (dvₓ/d) and/or of the third change function (dv_{ΔA}/dt) is determined using the least squares method.

6. Method according to one of the preceding claims,
wherein (1) a temperature is measured on the fill level measuring device,
**characterized in that**
the first limit value (v_{R,max}), the second limit value (v_{x,max}) and/or the third limit value (v_{X,max}) is/are defined as a temperature-based function.

7. Radar-based fill level measuring device for performing at least one of the methods according to one of the preceding claims, comprising the following components:
- A pulse generating unit (110, 111) that is configured to generate electrical high frequency pulses (s_{HF}) at a defined clock rate (f_{c}),
- A transmitter/receiver unit (120, 121) that is configured to
∘ transmit the high frequency pulses (s_{HF}) as microwave pulses (E_{HF}) in the direction of the filling material (3), and
∘ receive the reflected microwave pulses (E_{HF}) following reflection on the surface of the filling material (3),
- a scanning unit (130, 131) that is configured to generate electrical sampling pulses (s'_{HF}) at a defined sampling rate (f'_{c}),
- a mixer (14) that is configured to
∘ mix the received microwave pulses (e_{HF}) with the sampling pulses (s'_{HF}) in such a way that an evaluation signal (ZF) is generated, and/or
∘ control an amplitude offset (ΔA) of the evaluation signal (ZF),
- a detector (15) that is configured to measure a ratio (et>) between the sampling rate (f'_{c}) of the sampling pulses (s'_{HF}) and the clock rate (f_{c}) of the high frequency pulses (s_{HF}), and
- an evaluation unit (16) that is configured to
∘ check the ratio (Φ) against the target ratio (Φ_{ref}) by regulating the sampling rate (f'_{c}) relative to the target ratio (Φ_{ref}) using the first control variable (V_{R}) in such a way that the ratio (Φ) corresponds to the target ratio (Φ_{ref}), and
∘ measure the amplitude (A) and/or the amplitude offset (ΔA) of the evaluation signal (ZF), wherein the amplitude (A) is regulated using a second control variable (vₓ) or wherein the amplitude offset (ΔA) is regulated using a third control variable (V_{ΔA}),
∘ determine the fill level (L) based on the evaluation signal (ZF), and
∘ be classified as functional, insofar as none of the control variables (vₓ, v_{Δ}, v_{R}) either exceeds or falls below the corresponding limit value (v_{R,max,} v_{X,max}, v_{ΔA,max}).

8. Radar-based fill level measuring device according to claim 7, wherein the evaluation unit (16) is configured to communicate any malfunction/lack of functionality to a superordinate unit (4).

## Revendications

1. Procédé destiné à la vérification de la capacité de fonctionnement d'un transmetteur de niveau (1) basé sur un radar, lequel transmetteur sert à mesurer le niveau (L) d'un produit (3) se trouvant dans un réservoir (2), lequel procédé comprend les étapes suivantes :
- Émission cadencée d'impulsions micro-ondes (S_{HF}) en direction du produit (3) à une fréquence d'horloge (f_{c}) définie,
- Réception d'impulsions micro-ondes réfléchies (E_{HF}) après réflexion sur la surface du produit (3),
- Génération d'un signal d'évaluation (ZF) par échantillonnage des impulsions micro-ondes reçues (e_{HF}) à une fréquence d'échantillonnage définie
- Mesure d'un rapport entre la fréquence d'horloge (f_{c}) et la fréquence d'échantillonnage (f'_{c}),
- Adaptation du rapport (Φ) en fonction d'un rapport de consigne (Φ_{ref}) en régulant la fréquence d'échantillonnage (f'_{c}) au moyen d'une première grandeur de régulation (v_{R}) par rapport au rapport de consigne (Φ_{ref}) de telle sorte que le rapport corresponde au rapport de consigne (Φ_{ref}), et
- Mesure d'une amplitude (A) et/ou d'un décalage d'amplitude (ΔA) du signal d'évaluation (ZF), l'amplitude (A) étant réglée au moyen d'une deuxième grandeur de régulation (vₓ), ou le décalage d'amplitude (ΔA) étant réglé au moyen d'une troisième grandeur de régulation (v_{ΔA}),
le transmetteur de niveau (1) étant considéré comme capable de fonctionner dans la mesure où aucune des grandeurs de régulation (v_{R}, vₓ, V_{ΔA}) ne dépasse par excès ou par défaut une valeur limite (±v_{R,max}, ±v_{x,max}, ±v_{ΔA,max}) définie correspondante.

2. Procédé selon la revendication 1,
**caractérisé en ce que,**
dans la mesure où la première grandeur de régulation (v_{R}) ne dépasse pas la première valeur limite (v_{R,max}), une première fonction de changement (dv_{R}/dt) de la première grandeur de régulation (v_{R}) est déterminée par des cycles de mesure de niveau progressifs, un temps de fonctionnement résiduel (Δt) jusqu'à ce que la première valeur limite (v_{R,max}) soit atteinte étant calculé à l'aide de la première grandeur de régulation (v_{R}) actuelle et à l'aide de la première fonction de changement (dv_{R}/dt).

3. Procédé selon la revendication 1 ou 2,
**caractérisé en ce que,**
dans la mesure où la deuxième grandeur de régulation (vₓ) ne dépasse pas la deuxième valeur limite (v_{x,max}), une deuxième fonction de changement (dvₓ/dt) de la deuxième grandeur de régulation (vₓ) est déterminée par des cycles de mesure de niveau progressifs, un temps de fonctionnement résiduel (Δt) jusqu'à ce que la deuxième valeur limite soit atteinte étant calculé à l'aide de la deuxième grandeur de régulation (vₓ) actuelle et à l'aide de la deuxième fonction de changement (dvₓ/dt).

4. Procédé selon la revendication 1 ou 2,
**caractérisé en ce que,**
dans la mesure où la troisième grandeur de régulation (v_{ΔA}) ne dépasse pas la troisième valeur limite (v_{ΔA, max}), une troisième fonction de changement (dv_{ΔA}/dt) de la troisième grandeur de régulation (v_{ΔA}) est déterminée par des cycles de mesure de niveau progressifs, un temps de fonctionnement résiduel (Δt) jusqu'à ce que la troisième valeur limite (v_{ΔA, max}) soit atteinte étant calculé à l'aide de la troisième grandeur de régulation (v_{ΔA}) actuelle et à l'aide de la troisième fonction de changement (dv_{ΔA}/dt).

5. Procédé selon les revendications 2 à 4, pour lequel un type de fonction approprié de la première fonction de changement (dΔv_{R}/dt), de la deuxième fonction de changement (dvₓ/dt) et/ou de la troisième fonction de changement (dv_{ΔA}/dt) est déterminé au moyen de la méthode des moindres carrés.

6. Procédé selon l'une des revendications précédentes,
pour lequel une température est mesurée au niveau du transmetteur de niveau (1),
**caractérisé en ce que**
la première valeur limite (v_{R ,max}), la deuxième valeur limite (v_{x ,max}) et/ou la troisième valeur limite (v_{ΔA,max}) sont/est définie(s) comme une fonction dépendant de la température.

7. Transmetteur de niveau basé sur un radar, destiné à la mise en oeuvre d'au moins un des procédés selon l'une des revendications précédentes, lequel transmetteur comprend les composants suivants :
- Une unité de génération d'impulsions (110, 111), laquelle est conçue pour générer des impulsions électriques haute fréquence (s_{HF}) à une fréquence d'horloge (f_{c}) définie,
- Une unité d'émission/réception (120, 121), laquelle est conçue
o pour émettre les impulsions haute fréquence (s_{HF}) sous forme d'impulsions micro-ondes (E_{HF}) en direction du produit (3), et
o pour recevoir les impulsions micro-ondes réfléchies (E_{HF}) après réflexion sur la surface du produit (3),
- une unité d'échantillonnage (130, 131), laquelle est conçue pour générer des impulsions d'échantillonnage électriques (s'_{HF}) avec une fréquence d'échantillonnage (f'_{c}) définie,
- un mélangeur (14), lequel est conçu,
∘ pour mélanger les impulsions micro-ondes (e_{HF}) reçues avec les impulsions d'échantillonnage (s'_{HF}) de telle sorte qu'un signal d'évaluation (ZF) soit généré,
et/ou
∘ pour commander un décalage d'amplitude (ΔA) du signal d'évaluation (ZF),
- un détecteur (15), lequel est conçu pour mesurer un rapport (Φ) entre la fréquence d'échantillonnage (f'_{c}) des impulsions d'échantillonnage (s'_{HF}) et la fréquence d'horloge (f_{c}) des impulsions haute fréquence (s_{HF}), et
- une unité d'évaluation (16), laquelle est conçue,
∘ pour ajuster le rapport (Φ) avec le rapport de consigne (Φ_{ref}) en régulant la fréquence d'échantillonnage (f'_{c}) au moyen de la première grandeur de régulation (v_{R}) par rapport au rapport de consigne (Φ_{ref}), de telle sorte que le rapport (Φ) corresponde au rapport de consigne (Φ_{ref}), et
∘ pour mesurer l'amplitude (A) et/ou le décalage d'amplitude (ΔA) du signal d'évaluation (ZF), l'amplitude (A) étant régulée au moyen d'une deuxième grandeur de régulation (vₓ), ou le décalage d'amplitude (ΔA) étant régulé au moyen d'une troisième grandeur de régulation (v_{ΔA}),
∘ pour déterminer le niveau (L) à l'aide du signal d'évaluation (ZF), et
∘ pour déclarer que le transmetteur est capable de fonctionner dans la mesure où aucune des grandeurs de régulation (vₓ, v_{ΔA}, v_{R}) ne dépasse par excès ou par défaut la valeur limite correspondante (v_{R,max,} v_{x,max,} v_{ΔA,max}).

8. Transmetteur de niveau basé sur un radar selon la revendication 7, pour lequel l'unité d'évaluation (16) est conçue pour transmettre une éventuelle incapacité de fonctionnement à une unité supérieure (4).
